(19) Europäisches Patentamt European Patent Office Office européen des brevets

(11) **EP 2 314 159 B1**

(12) **EUROPEAN PATENT SPECIFICATION**

(45) Date of publication and mention
of the grant of the patent:
**13.06.2012 Bulletin 2012/24**

(51) Int Cl.:
***A01M 1/02*** *(2006.01)*

(21) Application number: **09382227.8**

(22) Date of filing: **23.10.2009**

(54) **Xylophagous insect detection method**

Xylophagen-Insektenerkennungsverfahren

Procédé de détection d'insectes xylophages

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**27.04.2011 Bulletin 2011/17**

(73) Proprietor: **Fundacion Cidemco
20730 Azpeitia Guipuzcoa (ES)**

(72) Inventors:
• **Lanchas Hervalejo, Angel
20730, AZPEITIA (Guipúzcoa) (ES)**
• **Cid Rivas, Ana
20730, AZPEITIA (Guipúzcoa) (ES)**

(74) Representative: **Carpintero Lopez, Francisco et al
Herrero & Asociados, S.L.
Alcalá 35
28014 Madrid (ES)**

(56) References cited:
**WO-A1-2004/110142      WO-A1-2006/128932
WO-A2-01/35190      US-A1- 2003 213 161
US-A1- 2004 093 190      US-A1- 2008 181 352
US-B1- 7 173 534**

• **ROBBINS W P ET AL: "Characteristics of acoustic emission signals generated by termite activity in wood" 19911208; 19911208 - 19911211, 8 December 1991 (1991-12-08), pages 1047-1051, XP010093982**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the Invention

The present invention is applied to the industrial sector dedicated to the tasks for assembling electronic instrumentation and programming electronic devices for digital signal processing, aimed at the field of the insect detection and pest control.

Background of the Invention

In recent years there has been an increasing interest for the preservation and recovery of the historical-artistic heritage and it must be taken into account that more than 70% of this heritage is formed by organic, biodegradable (mainly wood and paper) materials, which may be (and are) attacked and destroyed by fungi and insects.

Xylophagous insects act inside wood and their presence can seldom be detected until the damages are significant. In the case of the Cerambycidae larvae (Hylotrupes, Hesperophanes...), when they reach a certain size within the wood, it is possible to hear the noise that they make when boring galleries in the wood, if the environment in which the wood is located allows it and depending on the skill of the person carrying out the inspection.

The extreme case is that of termites, which always act in a concealed manner and cannot be heard right up front. The audible sounds made by termites are often quite weak and it is frequent from them to be masked by other environmental sounds. Distinguishing the sounds of termites from other audible sounds in the environment requires considerable training and it is quite subjective even with training.

One of the main problems is that the noise energy emitted by xylophages is extremely low. Noises, which do not have to be constant, which may be produced in the surroundings, must be added to this problem. Therefore, the detection of termites attacking structural woods and other wood products is usually a difficult process.

The main method used in the detection of termites is currently visual inspection. The inspector examines the accessible areas of the structures in which the termite activity is more likely to occur, paying special attention to very fine external and indirect signs such as upward movement galleries (chimneys), cracks in plaster coatings or presence of earthy mounds. When a wood element suspected to contain termites is located, the inspector uses a sharp probe such as a screwdriver to break the surface of the wood, to thus be able to locate the live termites and galleries. Consequently, the confirmation of an active infestation will generally need some localized minor damage in the wood.

Due to the diversity of components and frameworks in wood constructions and to the variety of their possible lesions, it is necessary to implement methodologies for the maintenance and recognition of the timber, based on minimally invasive and non-destructive systems.

The demand of the market for a safe, non-destructive and non-subjective method for detecting termites, especially aimed at the increasing interest for recovering artistic heritage, has generated a large number of alternatives, among which the one developed by the CIDEMCO Research Center should be emphasized: a system which allows both hearing and recording the sounds made by these insects when feeding from wood and which has become a complementary solution for the inspectors, mainly in the verification of the curative treatment of the wood.

Although the previous CIDEMCO system is able to determine the presence of termites, this and other equipment for capturing termites by means of sound data which exist on the market have several limitations:

- the noises of the insects are captured by means of a system using cable as a sound signal transmitter, with the subsequent deterioration of the wood;
- the system has a single sensor, whereby the sound data can only be captured in a single compartment and the analysis of the acoustic data must be carried out "in situ".

Another example of equipment for determining the presence of termites which suffers from the aforementioned handicaps is disclosed in "Characteristics of acoustic emission signals generated by termite activity in wood" (Robbins W.P. et al, December 8, 1991, pages 1047-1051). The termite interactions in wood are detected by a computer-controlled system which is invasive due to the acoustic emission sensors introduced in the pieces of wood and the connection cables.

A wireless connection is desirable, such as the wireless LAN network used in US 2008/0181352 for transmitting data from existing devices, for example, in an agricultural region, which electrocute insects. The number of killed insects is counted and transmitted through a wirless router to a central web server in order to record and provide the data to user terminals via Internet.

On the other hand, the use of a central computer that allows user to control system parameters related to audio detection of animal intruders, in particular, bird species, is teached in US 7173534.

The convenience of not invading the wood structures with cables, especially the structures belonging to architectural heritage (palaces, churches, museums, works of art, etc.) leads to the need for xylophagous insect detection systems which prevent significant damages in the wood, as well as which allow acting from other locations and, once a curative treatment is carried out, carrying out a remote tracking of the presence of the xylophages in any part of the structure under surveillance.

General Description of the Invention

The invention which is described relates to a method according to claim 1 for detecting the presence of xylophages in wood, which solve the previously mentioned problems. The present invention is applicable to any structures susceptible of having xylophages, especially architectures of historic and/or artistic interest, and can even be applied to restoration works and in baits for termites or the like.

One aspect but not according to the invention relates to xylophagous insect detection system comprising a series of devices or modules described below, able to communicate with one another by means of wireless links and exchange data in a transparent manner for the user, which can operate in multi-user environments. The system comprises at least one terminal for capturing the possible sounds of the insects, designed for being installed in any part of interest in the wood structure, and a central control station concentrating the data sent by all the installed terminals through a wireless communications module which uses radio frequency technologies. Thus, while each terminal may be located in different sites of the structures to be supervised, the central station can carry out the control of all of them remotely, since the communication link between the terminal and the central control station is by radio frequency.

The sound capturing terminal in turn comprises:

- One or more acoustic sensors generating an analog output signal. The sound caused by the xylophages in the structure in which the terminal is located is collected through a sensor, for example, a piezoelectric or ceramic sensor.
- A signal conditioning module connected to the acoustic sensor and which in turn comprises filtering, amplification and analog-to-digital conversion stages, adapted to change the analog output signal captured by the acoustic sensor into a digital input signal suitable for a digital signal processor. By means of the electronic treatment of the signal, consisting of the amplification thereof and a double filtering to eliminate unwanted noises, the sound signal, once converted into a digital signal, can be analyzed by a software designed to determine the existence or non-existence of xylophages based on the peaks (clicks) which they cause in the acoustic signal.
- The digital signal processor (DSP) implements a series of computations on the digital input signal to obtain a positive result when detecting the clicks of the insects in the audio signal:

   ■ Calculating the spectrogram of the input audio signal
   ■ Calculating the energy or amplitude of the signal (RMS) at fine level (for example, every 3 milliseconds of sampling of the signal) both in high-frequency bands (RMSH) (above 1700 Hz) and in low-frequency bands (RMSL) (below 1700 Hz).
   ■ Calculating mean values of the energy in low frequency (RMSL) in larger audio signal fragments (for example, in temporal windows for analyzing the sampled signal with a size greater than 33 seconds).
   ■ Calculating mean and deviation of the energy in high frequency (RMSH) in the most silent audio signal fragment (i.e., fragment in which the background noise is of high frequency).
   ■ Calculating the lower and upper threshold of the amplitude of the signal taking into account RMSH
   ■ Applying a peak detection algorithm to calculate peak positions in RMSH and find those which comply with certain restrictions indicating that they can be considered as clicks of insects.

Once the data relating to the sounds of xylophagous insects are obtained, they are transmitted through radio waves by means of the wireless communications module having the system connected (or integrated) to each terminal and the data arrive from the transmitter to a radio frequency receiver to be introduced in a processor (for example, a computer of a work station or a laptop), in which the user can analyze them thoroughly and determine by which percentage the wood structure has a risk of insects.

Thus, the system links the sensors with data communications modules, which use wireless technologies (2,5G, 3G or above) instead of structured cabling.

Among the wireless technologies susceptible of being applied in this system, several standards should be emphasized, Wi-Fi based on the IEEE 802.11 standard and Bluetooth, or preferably, proprietary wireless transmission technologies (radio modems) developed in the 433, 868 and 915 megahertz band. The solution with radio modems has the advantages of being much more cost-effective than the standard ones, maintaining the necessary coverage ranges in the work scenario (with net transfer rates of about 50-70 Kb/s in the sensors, the controllers have sufficient data for the analysis of transient signals and real-time monitoring of events), as well as of the extraordinary work autonomy thereof (energy consumption below 0.5 $\mu$A) and, therefore, the flexibility in the deployment of the sensors.

The central control station or residential gateway comprises a radio frequency interface for receiving the data provided by each terminal through the corresponding wireless communications module and a embedded web server providing a user-friendly access interface, which user can access the received data through an application of said web server and carry out a more thorough analysis, assisted by the graphic interface of the application.

At this point, the importance of the software development must be mentioned, in a preferred implementation of the application, using Java, such that it allows, from any location with access to Internet without needing any additional program (a simple Internet browser), the "on line" control of all the parameters associated with the specific scenario: supervision of alarms, graphs of events during the last hours, manual monitoring of a specific sensor, records of incidents and breakdowns...

Additionally, so that the user can access from remote terminal equipment (for example, a 3G mobile terminal, a PDA electronic agenda, a laptop or a personal computer connected to Internet), the controlling central gateway generally has a plurality of access interfaces (for example, USB, PCMCIA, Ethernet, GSM, GPRS or UMTS) communicating the access web interface with the interface of the user terminal equipment.

The central unit, fulfilling the dual function of controller of the devices located in the inspection sites and the functionality of gateway with the outside world in which the inspects are located, has the following advantageous features:

- Low cost, enabling the user to access a monitoring system without large investments.
- Multiple communications interfaces for adapting to the local or remote connection requirements of the operators: GSM, GPRS, Ethernet 10/100, USB, PCMCIA, digital inputs and outputs ...
- Embedded web server which, together with the previous communications, provides a comfortable access to the different user equipment: desktop computers, mobile terminals, electronic agendas ...This server supports the execution of the Common Gateway Interface (abbreviated as CGI), whereby the programming of the different interfaces adapted to each specific application can be carried out quickly and simply.
- Flexibility of the application, with a remote configuration and update of the software, from a central computer to any of the gateways by the different communications interfaces it has.

The users of the proposed system and method (pest control companies, restorers of furniture, of historic buildings, of works of arts, etc.) can find that the main advantages:

- Non-invasive techniques, since the exchange of data necessary for the detection and monitoring is done by means of radio frequency, which prevent the destruction or alteration of parts of the structures of the building (beams, floors, furniture, windows,...), for detecting the insects are used, especially contributing to the preservation of cultural heritage, as cables are not used.
- Efficiency, reliability and security in the communication of the data, because, since cables are not used, the transmission/reception of the information is not altered by the resistance which said cables can cause, in addition to the fact that the compilation and analysis of the data require less time. The sound detection/monitoring system has a considerable signal loss performance, to palliate the distances between the sensors and the distance to the point of collection/analysis of data. This system in turn assures the maximum reliability in the data obtained even in difficult conditions for capturing that data (monitoring of floor slabs and partitions of construction works). The acoustic recognition of the insects allowed by the method is sufficiently reliable to determine the presence of xylophages at a suitable time. It enables knowing at all times the existence of relevant data to determine if the wood is being attacked, since the transmission of the data through the radio waves is carried out in real time.
- The use of wireless technologies in monitoring the structures involves a saving in terms of installation cost and is much more convenient since there are no cables involved. Since a single central terminal is necessary for the concentration and analysis of the data, the cost of the system is directly related to the number of sensors to be placed in the building.
- Convenience in the use, improving the work conditions of the personnel dedicated to the detection of the xylophages, since once the system is installed, the inspection can be tracked from the workplace of such personnel, because the captured data are not analyzed from where they are taken but rather they are sent to a central terminal. The possibility of capturing the acoustic data of the insects in more than one compartment and their transmission by radio facilitates the control of the presence of these insects in a building, however complex and large is its architectural structure. It barely represents any physical effort by the person in charge of the control, since the existence or nonexistence of termites in any compartment can be checked from the central unit. The sensor equipment used to carry out the records of sounds "in situ" are lightweight and easy to handle. The work conditions of the operators are also improved because this preventive solution prevents the massive application of toxic products, such as those which are normally used in exterminating pests, which are harmful for health. Since it is involved in reducing the use of contaminating components, the system is beneficial for the environment.

The invention relates to a xylophagous insect detection method comprising the following steps:

- sampling a captured sound signal, by means of sensors installed in a wood structure suspected of having xylophagous insects, obtaining a digitalized audio fragment. It is possible to cyclically capture audio fragments which remotely, from a PC or other processing equipment connected to a control unit concentrating the signals of all the sensors, will be analyzed to determine the probability (percentage) of the existence of insects in the structure and show the result in a graphic interface to the user.

- calculating a signal amplitude of the digitalized audio fragment in a high-frequency band (RMSH) and a signal amplitude of the digitalized audio fragment in a low-frequency band (RMSL). For these calculations, the Fast Fourier Transform (FFT) is applied on the digitalized audio fragment and in a series of sets of samples of the signal (window of samples or frames).

- executing a peak detection algorithm in the signal amplitude calculated in the high-frequency band (RMSH) to obtain all the peaks, defined as the time instants within a window of samples in which the signal amplitude is greater than that of the immediately preceding and subsequent sample.

- among the peaks, selecting at least one which is defined as a click instant in which, within a certain environment (interval centered in said instant of the peak), the number of obtained time instants the signal amplitude of which in the high-frequency band (RMSH) exceeds a lower threshold is less than a maximum limit, and in said instant the signal amplitude in the high-frequency band (RMSH) is greater than an upper threshold and greater than 50 percent of the signal amplitude in the high-frequency band (RMSH) in a certain interval.

- Associating the click instant selected with an indication (for example, a mark in the way file in which the audio fragment has been recorded; a label in the acoustic signal represented graphically) representing that said peak or click instant corresponds to a xylophage sound which has been detected.

A final aspect of the invention is a computer program according to claim 9 comprising programming code means adapted to carry out the previously described method in a DSP, a FPGA (Field-Programmable Gate Array), an ASIC (Application-Specific Integrated Circuit) card, a microprocessor or microcontroller, or a general purpose processor.

Description of the Drawings

To complement the description which is being made and for the purpose of aiding to better understand the features of the invention according to a preferred practical embodiment thereof, a set of drawings is attached as an integral part of this description, in which the following has been depicted with an illustrative and non-limiting character:

Figure 1 shows a schematic depiction of a scenario of application of the xylophage detection system.
Figure 2 shows a block diagram of the controlling central gateway of the system.
Figure 3 shows a block diagram of a xylophage sound sensor terminal of the system.
Figure 4 shows a block diagram of the wireless communications module connecting each terminal sensor with the central gateway of the system.
Figure 5 shows a scheme of the calculations of the signal amplitudes and the averages thereof used by the detection method according to a preferred embodiment of the invention.
Figure 6 shows screenshots of the application for labeling the termite sounds in the audio signal according to a possible embodiment of the invention.

Detailed Description of the Invention

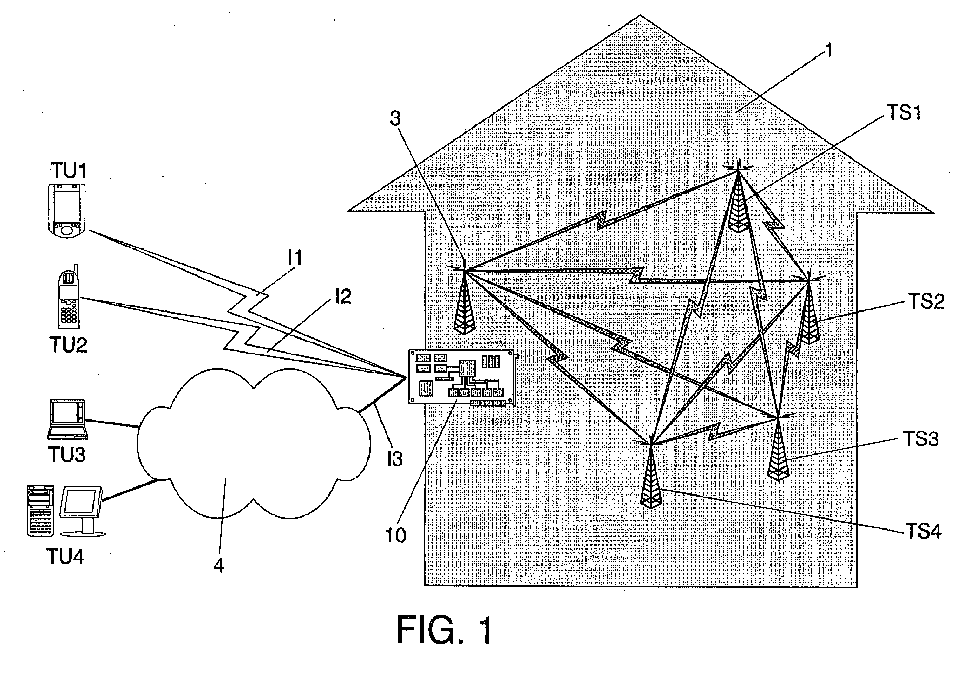

There are various and very different scenarios which can be contemplated when applying the system, although all of them can be comprised within one and the same philosophy depicted in Figure 1. In an intelligent building (1) provided with the termite monitoring system the terminals (TS1, TS2, TS3, TS4) are distributed with the sound sensors, which are in charge of capturing audio data and the digital processing thereof. These sensors can be connected to a common information treatment module and radio frequency communications interface. A processing of the information can thus be carried out in the terminal itself, balancing the process core between the sensors and the concentrator, in addition to forming part of a consumption minimization strategy, which provides the sensors with sufficient independence.

Acting as a concentrator of all these sensors there is the residential gateway (10) or central unit, which acts as a controller of all the terminals (TS1, TS2, TS3, TS4), to which it is connected by means of a radio frequency wireless link (3), to monitor the status of each of them, while at the same time it offers different modes of interaction with the user. The interaction can be carried out remotely, by means of an integrated web interface and different user access interfaces (I1, I2, I3), for example, based on GSM, GPRS, Ethernet..., as a result of which the monitoring can be accessed by means of different user terminals (TU1, TU2, TU3, TU4): mobile telephones, PDAs, PCs or laptops connected to Internet (4), such that the applications are completely programmable and configurable by the user.

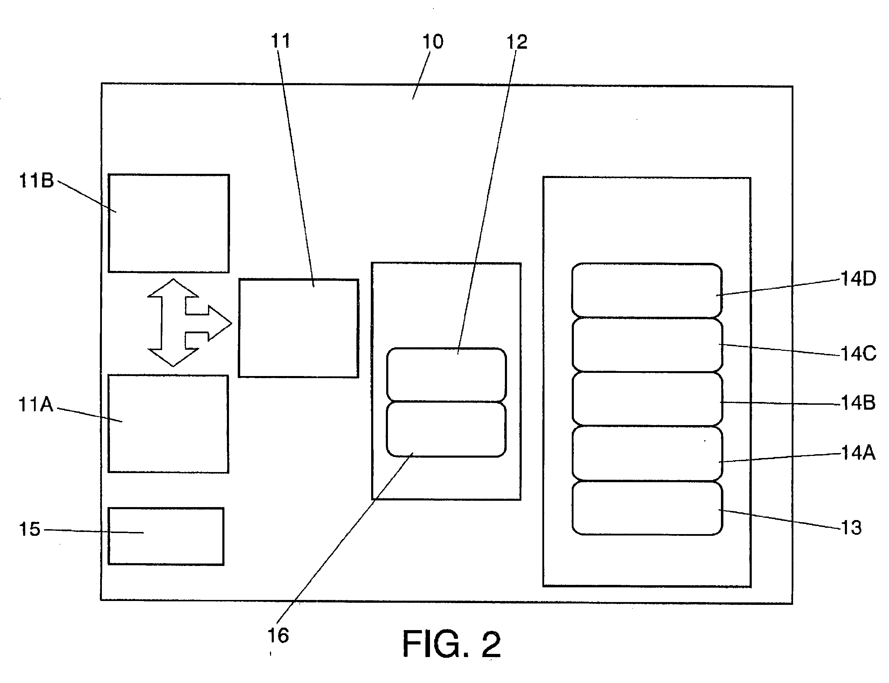

Figure 2 shows a block diagram of the gateway (10), consisting of a platform based on a microcontroller (11), for example, micro Coldfire of Motorola MCF5272V2, which is especially designed for embedded systems with large communications capacity requirements. This microcontroller is controlled by an operating system (12), which is the O.S. μClinux, an adaptation of the popular O.S. Linux so that it works in microcontrollers which do not have a memory management unit, as is the case of MCF5272. The microcontroller can thus interoperate with RAM and FLASH memories (11A, 11B). This operating system has a size which is quite smaller than of a standard Linux distribution, which makes it suitable for the development of embedded systems. To make the platform flexible, the gateway (10) has an expansion bus (13) with all the signals coming from the microcontroller (11) to add different external devices or interfaces (14A, 14B, 14C, 14D), for example with digital inputs/outputs, interface RS-232, USB1.1 and Ethernet 10/100. Thus, any functionality which is not in the platform can be obtained by means of including a new hardware layer attached thereto by means of the expansion bus (13).

Furthermore, the gateway (10) includes an interface or radio module (15) working in the 868 MHz ISM band, tunable and programmable, through which it receives the radio messages with the data of presence/absence of termites obtained by the sensor terminals and notifies them by means of serial communication to the embedded web server (16).

Thus, the previous platform has the necessary access interfaces for being connected, on one hand, to the wireless terminals located in the building under supervision and, on the other hand, with the terminal of the supervisor, which may or may not also be wireless. The gateway (10) thus acts with a dual role as a concentrator of the controlled sensor devices and upon allowing the complete interaction of the end user with all the controlled devices, adapting to the topology of the specific scenario of operations.

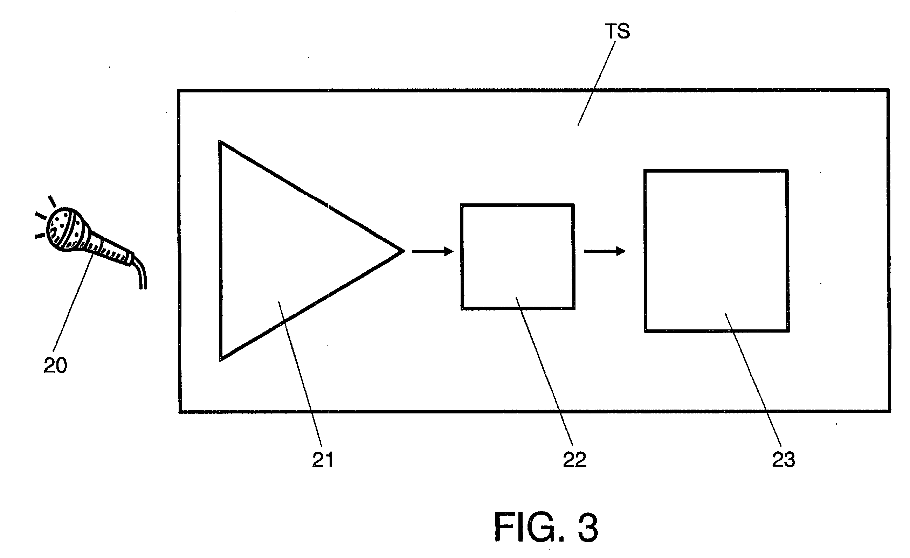

The sensor terminal (TS) with which the gateway (10) is communicated has the modules shown in Figure 3:

- a sound capturing module consisting of a sensor device and a polarization circuit, for example, a contact microphone (20).
- a signal conditioning module including first a signal filtering and amplification stage (21). The amplification board for the signal of the acoustic sensor contains a low-noise and two-stage amplifier suitable for amplifying the signal of the ceramic sensor which is placed on the outside of the prototype. It includes a gain control for adjusting the signal levels to those needed by the A/D converter (22) which can be integrated in the DSP (23).
- a digital signal processing or DSP module (23), for example, that based on the DSP 1.1 TMS 320C88xx low-power family, in which the signal is analyzed, the peak detection algorithm is applied and action is taken if necessary.

The connection with the sensors, understanding as such the processing board and the physical sensor, is carried out by means of a serial interface, for example RS232, as well as by means of configurable digital inputs and outputs and analog inputs with their corresponding analog-to-digital converters.

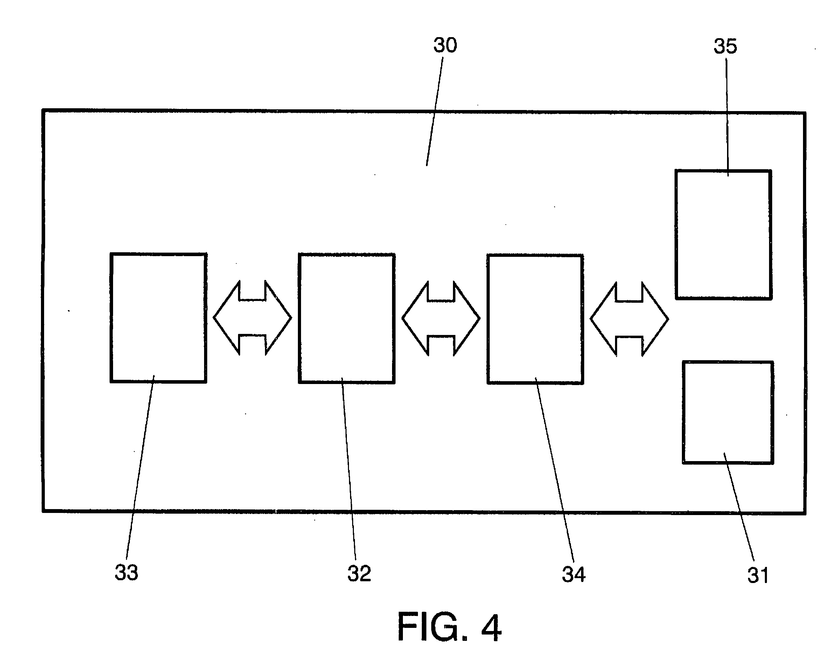

The gateway (10) and the terminal (TS) are connected by means of the radio link (3) by a communications module (30), shown in Figure 4, which can be integrated in the same terminal (TS) or be externally connected to one or several terminals. The wireless communications module (30) comprises:

- Radio frequency transmitter (31), formed by an antenna, amplifiers and filters for adapting the signal to the transmission. This radio frequency stage works in the 868 MHz band, although it can also work in the 315; 433 and 915 MHz bands, in a configurable manner. All the bands are ISM -Industrial, Scientific and Medical-public use bands and only rules in relation to work cycle and power must be observed. By complying with these rules, coverages of 300 m in free space and 60 m in a closed environment with a transmission rate of approximately 19000 bps with constant flow and a maximum rate of 76800 bps, depending on the code used, are obtained. These data corroborate the usefulness of these devices for the scenario which is being considered, given that both the binary rate and the distances are sufficient for the required applications.
- A microprocessor (32), for example, the microcontroller of the 8051 family with 32 Kb of FLASH (33) and 2049 bytes of RAM (34) internal memory and which can be communicated with several Universal Asynchronous Receiver/Transmitter or UART chips (35). The intelligence of the microprocessor allows providing the communications device with autonomy when carrying out certain actions or processing of data. The communications with the controller are thus less frequent, decentralizing the work load, reducing the consumption and therefore increasing the lifetime of the batteries. At the same time, a network of devices monitoring the status of each one can be administered, informing in the event of any incident, such as the breakdown of one of them or low battery.

In order to provide the devices with complete autonomy, the power supply is provided with 1.5V AAA type batteries arranged in series which, together with the necessary software allowing the device to remain idle while it is not carrying out any task, increase the lifetime of the device, and at the same time reduce the cost of each terminal and to which the small size of the described modules is added.

The processing of the signal can be carried out from digitalized fragments thereof to detect clicks therein which can be caused by termites. This function is the main core of the software executed by the system, responsible for analyzing the signal and detecting clicks, which is based on calculating by using the FFT the signal amplitude (RMS), in a high-frequency band (RMSH) and low-frequency band (RMSL).

The method used is provided to be applied in real situations to fragments with a duration of 2 minutes.

The click detection method starts from the analysis of the signal amplitude in a band with a frequency above 1700 Hz because, due to the characteristics of sound transmission in wood, most of the background noise, with an external origin, is below this frequency and it can therefore be presumed that the energy observed at higher frequencies is mainly due to termites. Consequently, RMSH has pronounced and short-duration peaks when clicks due to termites occur.

For a more detailed explanation, the operation can be divided into two parts:

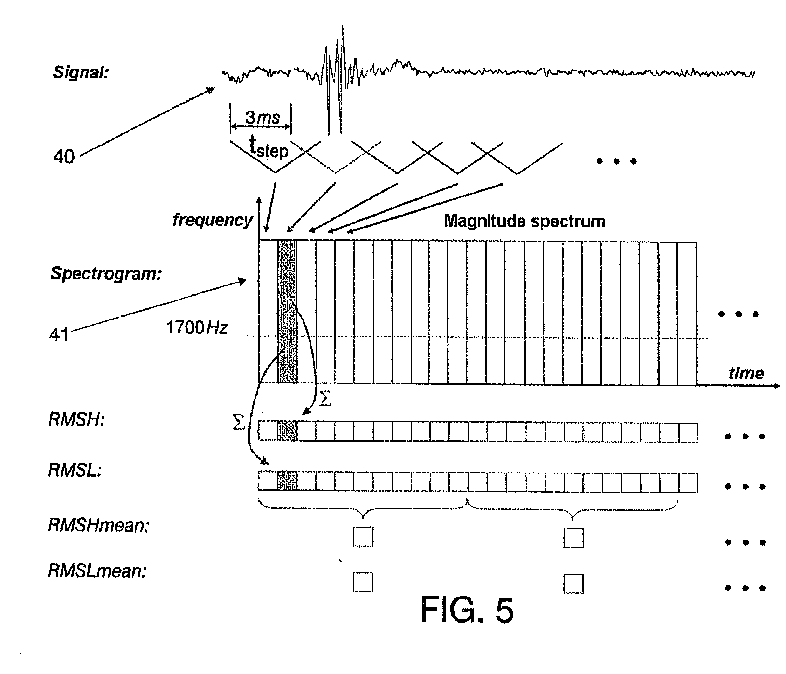

- Calculating in the signal fragment (40) the signal amplitude in two frequency bands, above and below 1700 Hz. The amplitude is calculated in both bands (RMSH and RMSL) every 3 ms ($t_{step}$) in order to be able to distinguish narrow peaks in RMSH. The calculation is carried out obtaining the magnitude spectrum of small consecutive and overlapped blocks of the signal spectrogram (41) as shown in Figure 5. The signal amplitude or the magnitude spectrum is calculated by applying the Fast Fourier Transform, FFT, at sample intervals, the interval length of which is the power of 2 immediately above 3 ms. For example, using a sampling frequency of 8 KHz, an FFT of 32 samples is calculated every 24 samples; i.e., $t_{step}$ = 3 ms. Furthermore, a Hanning window is applied to the samples of said intervals. RMSH is obtained by adding the values of the magnitude spectrum corresponding to frequencies above 1700 Hz and RMSL the ones which are below. Both RMSH and RMSL are averaged, obtaining RMSHLmean and RSMLmean respectively, every 33 ms, i.e., every 11 sample or step intervals.

- Peak detection algorithm to search for the clicks produced by the termites, analyzing all the peaks present in the RMSH vector and selecting those which comply with a series of restrictions. An RMSH element is said to be a peak when its magnitude is greater than that of the preceding and subsequent elements. To verify the compliance of the restrictions it is necessary to analyze the RMSH values in an environment around the peak, for example of 11 sample intervals, comparing them with two threshold values of amplitude: a lower one U1 and another upper one U2. The calculation of the thresholds U1 and U2 is carried out by taking into account the RMSH amplitude present in the signal in a silence situation (high-frequency background noise). To that end, the 33 ms block with minimum mean amplitude RMSHmean is sought in the audio fragment to be analyzed and RMSH is modeled in that "silent" block with two statistical parameters: mean $M_{SIL}$ and standard deviation $D_{SIL}$. The thresholds U1 and U2 are calculated as follows: U1 is fixed for the entire fragment and is obtained by adding to the mean $M_{SIL}$ the deviation $D_{SIL}$ multiplied by a suitable factor. This factor is one of the adjustable parameters of the system ($\alpha_{U1}$). After the tests carried out, a value of 6 has been assigned to it.

$$U1 = M_{SIL} + \alpha_{U1} \cdot D_{SIL}$$

U2 is recalculated for each peak to be analyzed with the following formula:

$$U2 = M_{SIL} + max(\alpha_{U2\_dev} \cdot D_{SIL}, \; \alpha_{U2\_rmsl} \cdot RMSL_{m\_T})$$

where $\alpha_{U2\_dev}$ and $\alpha_{U2}$_msl are adjustable parameters with values of 15 and 0.5, $RMSL_{m\_T}$ is the average of the signal amplitude in the low-frequency band (RMSL) for an instant T of the time instants obtained by the peak detection algorithm.

On one hand, U2 is a more demanding version of U1, with a deviation factor of 15 instead of 6, and it furthermore includes a term dependent on the mean energy in the low frequencies, which increases in the presence of external noises. The threshold thus increases with external noises, reducing the possibility of false detections.

The restrictions which a peak must comply with to be considered as produced by a termite are:

- The RMSH value in the peak must exceed the upper threshold U2.
- The number of peaks in the environment of the peak which exceed the lower threshold U1 must be less than a predetermined maximum limit value, which in the implemented version has been established at 5.
- The RMSH value in the peak must exceed the RMSH value of any other peak in its environment by 50%.

The syntax for the execution of the algorithm (determiRH2F) with the input and output arguments and adjustable parameters is:

[ncandis,icandis,escalay] = determiRH2F(x,step,frameL,fs,visu)

The input arguments are:

X: vector containing the digitalized audio signal.
Step: advance in samples of the analysis window for the spectrogram.
frameL: size in samples of the analysis window for the spectrogram.
Fs: sampling frequency.
Visu: character string indicating if a graph is to be generated with the evolution of some variables used by the algorithm (RMSH, RMSLmen and thresholds). 'sivisu' for generation and 'novisu' for non-generation.

The output arguments are:

ncandis number of termite clicks detected.
Icandis positions of the clicks
Escalay range of values used in the vertical axis in the event of a graph being generated.

As an example of use, to analyze a digitalized 'fichero.wav' file at 8 KHz, using 3 ms as the analysis period, it would be sufficient to execute the following from the command window:

```
[x fs] = wavread('fichero.wav');
nc = determiRH2F(x,24,32,fs,'novisu')
```

The result nc is the number of termite clicks detected.
At the beginning of the function code there are several parameters which have been adjusted, seeking to optimize termite detection minimizing false detections.

```
% PARAMETERS which are modifiable to adjust the algorithm
%------------------------------------------------------------------------
fcut % cutoff frequency for high frequencies
alphaU1 % threshold1 calculation factor (for deviation in silence)
alphaU2dev % threshold2 calculation factor (for deviation in silence)
alphaU2rmsl % threshold2 calculation factor (for medium background noise)
peakNmax % maximum peak width, in number of frames
fragNsteps % number of frames for averaging energy (it must be odd)
%------------------------------------------------------------------------
```

The monitoring of the data can involve a program for monitoring by means of a PC, connected to the gateway (10), an audio signal coming from the outside through a sound card. It basically captures an audio fragment cyclically, analyzes it using determiRH2F, shows on the screen a message showing the probability of the existence of termites, also writes the message in a log file and, if desired, also saves the captured audio in .wav format. The program remains operating until the <Enter> key is pressed.
It actually does not calculate a true probability, what it does is decide an "alert level according to the number of clicks detected. The 0% alert level means that no clicks have been detected, and increases in tens for every increase in the number of clicks which exceeds a value predetermined (chaniv) by the user.
For example, for chaniv = 5, the meaning of the levels is:

0%: no click detected
10%: 1-5 clicks detected
20%: 6-10 clicks detected
30%: 11-15 clicks detected
40%: 16-20 clicks detected
50%: 21-25 clicks detected
60%: 26-30 clicks detected
70%: 31-35 clicks detected
80%: 36-40 clicks detected

90%: 41-45 clicks detected
100%: more than 45 clicks detected

The syntax for the execution is:

vigitermi(tcapt,tcycle,chaniv,fs,wav)

The input arguments are:

tcapt      duration in minutes of the audio capture.
tcycle      time in minutes between captures.
Chaniv      number of clicks necessary to go up one alert level.
fs      sampling frequency.
wav      character string indicating if audio captures are to be saved in
'audioX.wav'      files. 'siwav' for saving and 'nowav' for not saving.

There are no output arguments.
As an example of use, to start up a monitoring which captures audio the last 2 minutes of each hour, with a sampling frequency of 8 KHz and 5 clicks per level, it is sufficient to exceute the following:

vigitermi(2, 60, 5, 8000, 'nowav')

An example of the information appearing on the screen during the execution is shown below:

```
>> vigitermi(2, 60, 5, 8000, 'nowav')
21-Mar-2007 13:40:15 program started (tcapt=1 min) (tcycle=2 min) (chaniv=5) To stop it press <Return>
21-Mar-2007 14:40:15                          20% probability of existence of termites
21-Mar-2007 15:40:18                          20% probability of existence of termites
21-Mar-2007 16:40:18                          20% probability of existence of termites
                                     -
                                     -
                                     -
21-Mar-2007 22:40:18                          20% probability of existence of termites
21-Mar-2007 22:45:35                          program ended
>>
```

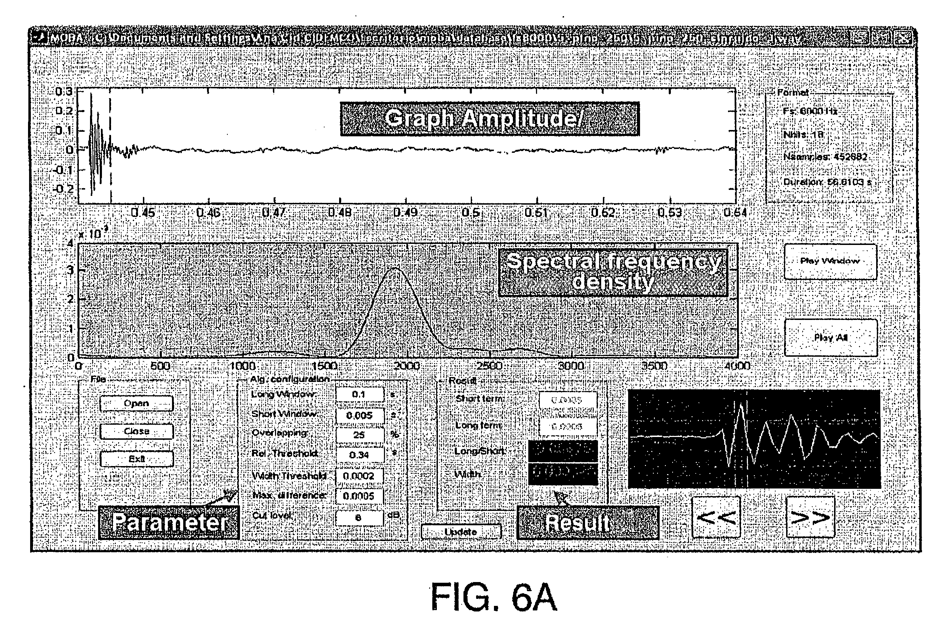

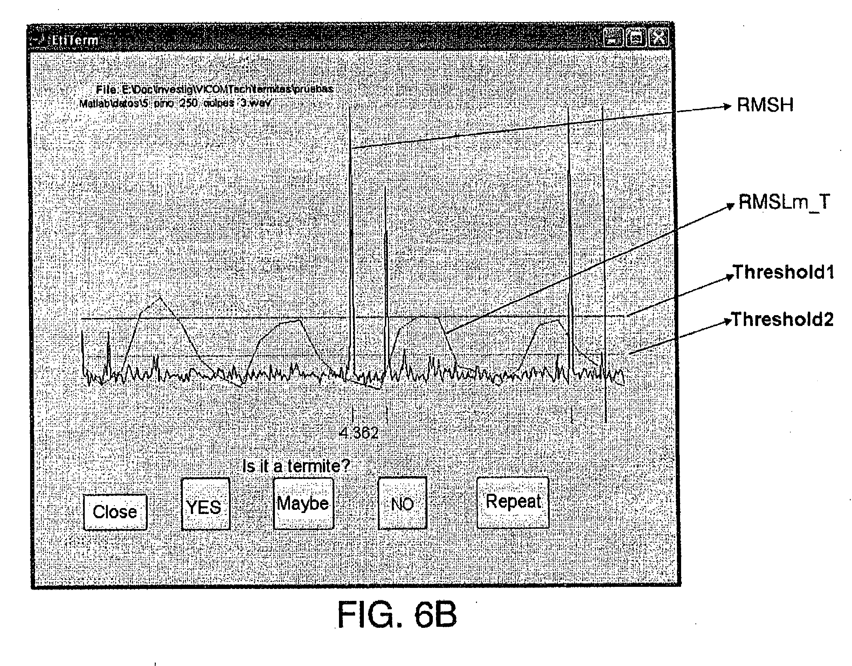

Likewise, the end user can use a tool to label ".wav" files with information referring to termites, allowing him or her to hear and mark the positions in which there are clicks due to termites. To that end, the program uses the function determiRH2F to detect possible clicks and allows the user to reproduce the audio corresponding to the click the times necessary to decide if it is a termite. In addition to the labeling, the program is very useful for checking the operation of the detection algorithm determiRH2F, because it shows on the screen the evolution of the high-frequency RMS energy and the thresholds used in the decision, as shown in Figures 6A and 6B.
In this text, the word "comprises" and its variants (such as "comprising", etc.) must not be interpreted in an exclusive manner, i.e., they do not exclude the possibility that what is described includes other elements, steps etc.
On the other hand, the invention is not limited to the specific embodiments described herein but rather it also encompasses the variants which can be carried out by the person having ordinary skill in the art (for example, in relation to values of the parameters of the algorithms and electronic devices used in the system, etc.), without departing from the scope of the invention which is inferred from the claims included below.

**Claims**

1. Xylophagous insect detection method, comprising:

- sampling a sound signal captured in a wood structure suspected of having xylophagous insects to obtain a digitalized audio fragment,

**characterized in that** it further comprises:

- calculating a signal amplitude of the digitalized audio fragment in a high-frequency band (RMSH) and a signal amplitude of the digitalized audio fragment in a low-frequency band (RMSL),
- executing a peak detection algorithm in the calculated signal amplitude of the digitalized audio fragment in a high-frequency band (RMSH) to obtain all the time instants within a window of samples in which the signal amplitude is greater than of the immediately preceding and subsequent sample,
- among the time instants obtained, selecting at least one click instant in which, within a certain interval centered in said instant, the number of obtained time instants the signal amplitude of which in the high-frequency band (RMSH) exceeds a lower threshold is less than a maximum limit, and in said instant the signal amplitude in the high-frequency band (RMSH) is greater than an upper threshold and greater than 50 percent of the signal amplitude in the high-frequency band (RMSH) in a certain interval;
- associating the selected click instants with an indication of xylophage sound detected.

2. Method according to claim 1, wherein:

- the calculation of the signal amplitude of the digitalized audio fragment in a high-frequency band (RMSH) is carried out by executing in certain consecutive sample intervals the Fast Fourier Transform to obtain values of magnitude spectrum and adding the values of magnitude spectrum corresponding to frequencies above 1700 hertz;
- the calculation of the signal amplitude of the digitalized audio fragment in a low-frequency band (RMSL) is carried out by executing in certain consecutive sample intervals the Fast Fourier Transform to obtain values of magnitude spectrum and adding the values of magnitude spectrum corresponding to frequencies above 1700 hertz.

3. Method according to claim 2, wherein the consecutive sample intervals in which the Fast Fourier Transform is executed are spaced 3 milliseconds.

4. Method according to claim 3, wherein the sample intervals in which the Fast Fourier Transform is executed have a length equal to the power of two immediately above 3 milliseconds.

5. Method according to any of claims 1 to 4, further comprising a step of determining the lower and upper thresholds used to select the click instants by carrying out the following steps:

- averaging the signal amplitudes calculated in the high-frequency band (RMSH) and in the low-frequency band (RMSL) within a window of samples;
- within the window of samples, determining a silent fragment corresponding to the minimum average of the signal amplitude in the high-frequency band (RMSH);
- calculating a mean $M_{SIL}$ and a standard deviation $D_{SIL}$ of the signal amplitude in the high-frequency band (RMSH) in the silent fragment;
- calculating the following formulas to obtain the lower threshold U1 and the upper threshold U2 respectively:

$$U1 = M_{SIL} + \alpha_{U1} \cdot D_{SIL}$$

$$U2 = M_{SIL} + \max(\alpha_{U2\_dev} \cdot D_{SIL,} \ \alpha_{U2\_rmsl} \cdot RMSL_{m\_T})$$

where $\alpha_{U1}$, $\alpha_{U2\_dev}$, $\alpha_{U2\_rmsl}$ are adjustable parameters and $RMSL_{m\_T}$ is the average of the signal amplitude in the low-frequency band (RMSL) for an instant T of the time instants obtained by the peak detection algorithm.

6. Method according to claim 5, wherein the window of samples in which the signal amplitudes calculated in the high-frequency band (RMSH) and in the low-frequency band (RMSL) are averaged have a length of 33 milliseconds.

7. Method according to any of claims 5-6, wherein the parameters $\alpha_{U1}$, $\alpha_{U2\_dev}$, $\alpha_{U2\_rmsl}$ are adjusted with values of 6, 15 and 0.5 respectively.

8. Method according to any of claims 1 to 7, wherein the digitalized audio fragment has a duration of 2 minutes and the sound signal is sampled with a frequency of 8 kilohertz.

9. Computer program comprising programming code means adapted to carry out all the steps of the method defined according to any of claims 1 to 8, when said program is executed in a digital signal processor or in a general purpose processor.

**Patentansprüche**

1. Verfahren zum Erkennen xylophager Insekten, umfassend:

   Abtasten eines Tonsignals, das in einer Holzstruktur abgenommen wurde, die unter Verdacht des Befalls durch xylophage Insekten steht, um ein digitalisiertes Audio-Fragment zu erhalten,
   **dadurch gekennzeichnet, dass** das Verfahren ferner umfasst:

   - Berechnen einer Signalamplitude des digitalisierten Audio-Fragments in einem Hochfrequenzband (RMSH) und einer Signalamplitude des digitalisierten Audio-Fragments in einem Niedrigfrequenzband (RMSL),
   - Ausführen eines Peak-Detektions-Algorithmus an der berechneten Signalamplitude des digitalisierten Audio-Fragments in einem Hochfrequenzband (RMSH), um sämtliche Zeitpunkte innerhalb eines Abtastwerte-Fensters zu erhalten, in dem die Signalamplitude größer ist als diejenige des unmittelbar vorausgehenden und des unmittelbar nachfolgenden Abtastwerts,
   - Wählen mindestens eines Klick-Punkts aus den erhaltenen Zeitpunkten, an dem innerhalb eines bestimmten Intervalls, das an dem Punkt zentriert ist, die Anzahl erhaltener Zeitpunkte, deren Signalamplitude in dem Hochfrequenzband (RMSH) einen unteren Schwellenwert überschreitet, niedriger als ein maximales Limit ist, und wobei an diesem Punkt die Signalamplitude in dem Hochfrequenzband (RMSH) größer als ein oberer Schwellenwert und in einem bestimmten Intervall größer als 50 Prozent der Signalamplitude in dem Hochfrequenzband (RMSH) ist;
   - Zuordnen der gewählten Klick-Punkte zu einer Indikation eines erkannten Xylophagus-Tons.

2. Verfahren nach Anspruch 1, bei dem:

   - die Berechnung der Signalamplitude des digitalisierten Audio-Fragments in einem Hochfrequenzband (RMSH) vorgenommen wird, indem in bestimmten aufeinanderfolgenden Abtastintervallen die Fast-Fourier-Transformation ausgeführt wird, um Größenspektrums-Werte zu erhalten, und die Größenspektrums-Werte, die Frequenzen über 1700 Hertz entsprechen, addiert werden;
   - die Berechnung der Signalamplitude des digitalisierten Audio-Fragments in einem Niedrigfrequenzband (RMSL) vorgenommen wird, indem in bestimmten aufeinanderfolgenden Abtastintervallen die Fast-Fourier-Transformation ausgeführt wird, um Größenspektrums-Werte zu erhalten, und die Größenspektrums-Werte, die Frequenzen über 1700 Hertz entsprechen, addiert werden.

3. Verfahren nach Anspruch 2, bei dem die aufeinanderfolgenden Abtastintervalle, in denen die Fast-Fourier-Transformation ausgeführt wird, im Abstand von 3 Millisekunden zueinander liegen.

4. Verfahren nach Anspruch 3, bei dem die Abtastintervalle, in denen die Fast-Fourier-Transformation ausgeführt wird, eine Länge haben, deren Zweierpotenz unmittelbar über 3 Millisekunden liegt.

5. Verfahren nach einem der Ansprüche 1 bis 4, ferner mit einem Schritt des Bestimmens der zum Wählen der Klick-Punkte verwendeten unteren und oberen Schwellenwerte durch Ausführen der folgenden Schritte:

   - Mittelung der in dem Hochfrequenzband (RMSH) und dem Niedrigfrequenzband (RMSL) berechneten Signalamplituden innerhalb eines Abtastwerte-Fensters:
   - innerhalb des Abtastwerte-Fensters, Bestimmen eines stillen Fragments, das dem Minimal-Mittelungswert der Signalamplitude in dem Hochfrequenzband (RMSH) entspricht;
   - Berechnen einer mittleren $M_{SIL}$ und einer Standard-Abweichung $D_{SIL}$ der Signalamplitude in dem Hochfrequenzband (RMSH) in dem stillen Fragment;
   - Berechnen der folgenden Formeln zum Erhalt des unteren Schwellenwerts U1 bzw. des oberen Schwellenwerts

U2:

$$U1 = M_{SIL} + \alpha_{U1} \cdot D_{SIL}$$

$$U2 = M_{SIL} + \max(\alpha_{U2\_dev} \cdot D_{SIL}, \, \alpha_{U2\_rmsl} \cdot RMSL_{m\_T})$$

wobei $\alpha_{U1}$, $\alpha_{U2\_dev}$, $\alpha_{U2\_rmsl}$ einstellbare Parameter sind und $RMSL_{m\_T}$ der Mittelwert der Signalamplitude in dem Niedrigfrequenzband (RMSL) für einen Punkt T der durch den Peak-Detektions-Algorithmus erhaltenen Zeitpunkte ist.

6. Verfahren nach Anspruch 5, bei dem das Abtastwerte-Fenster, in dem die in dem Hochfrequenzband (RMSH) und in dem Niedrigfrequenzband (RMSL) berechneten Signalamplituden gemittelt werden, eine Länge von 33 Millisekunden haben.

7. Verfahren nach einem der Ansprüche 5 bis 6, bei dem die Parameter $\alpha_{U1}$, $\alpha_{U2\_dev}$, $\alpha_{U2\_rmsl}$ mit Werten von 6 bzw. 15 bzw. 0,5 angepasst werden.

8. Verfahren nach einem der Ansprüche 1 bis 7, bei dem das digitalisierte Audio-Fragment eine Dauer von 2 Minuten hat und das Tonsignal mit einer Frequenz von 8 Kilohertz abgetastet wird.

9. Computerprogramm mit einer Programmiercode-Vorrichtung, die in der Lage ist, sämtliche Schritte des in einem der Ansprüche 1 bis 8 definierten Verfahrens durchzuführen, wenn das Programm in einem Digitalsignalprozessor oder in einem Allzweckprozessor ausgeführt wird.

**Revendications**

1. Procédé de détection d'insectes xylophages comprenant:

   - échantillonner un signal sonore capturé dans une structure de bois dont on suspecte qu'elle présente des insectes xylophages afin d'obtenir un fragment audio numérisé,

   **caractérisé en ce qu'**il comprend en outre:

   - calculer une amplitude de signal du fragment audio numérisé dans une bande de haute fréquence (RMSH) et une amplitude de signal du fragment audio numérisé dans une bande de basse fréquence (RMSL),
   - exécuter un algorithme de détection de crête dans l'amplitude de signal calculée du fragment audio numérisé dans une bande de haute fréquence (RMSH) pour obtenir tous les instants de temps dans une fenêtre d'échantillons dans laquelle l'amplitude du signal est plus élevée que de l'échantillon directement précédent et suivant,
   - parmi les instants obtenus, sélectionner au moins un instant clic dans lequel, dans un certain intervalle centré dans ledit instant, le nombre d'instants obtenus dont l'amplitude de signal dans la bande de haute fréquence (RMSH) dépasse un seuil inférieur, est inférieur à une limite maximum, et dans ledit instant, l'amplitude du signal dans la bande de haute fréquence (RMSH) est plus grande qu'un seuil supérieur et plus grande que 50% de l'amplitude du signal dans la bande de haute fréquence (RMSH) dans un certain intervalle;
   - associer les instants clic sélectionnés à une indication d'un son de xylophage détecté.

2. Procédé selon la revendication 1, dans lequel:

   - le calcul de l'amplitude du signal du fragment audio numérisé dans une bande de haute fréquence (RMSH) est exécuté en exécutant à certains intervalles d'échantillon consécutifs la Transformée de Fourier Rapide pour obtenir des valeurs d'un spectre de grandeur et ajouter les valeurs du spectre de grandeur correspondant à des fréquences au-dessus de 1700 hertz;
   - le calcul de l'amplitude du signal des fragments audio numérisés dans une bande de basse fréquence (RMSH) est exécuté en exécutant à certains intervalles d'échantillons consécutifs la Transformée de Fourier Rapide pour obtenir des valeurs d'un spectre de grandeur et pour ajouter les valeurs du spectre de grandeur correspondant à des fréquences supérieures à 1700 hertz.

3.  Procédé selon la revendication 2, dans lequel les intervalles d'échantillon consécutifs dans lesquels la Transformée de Fourier Rapide est exécutée sont espacés de 3 millisecondes.

4.  Procédé selon la revendication 3, dans lequel les intervalles d'échantillon dans lesquels la Transformée de Fourier Rapide est exécutée ont une longueur égale à la puissance de deux directement au-dessus de 3 millisecondes.

5.  Procédé selon l'une quelconque des revendications 1 à 4, comprenant en outre une étape consistant à déterminer les seuils inférieur et supérieur utilisés pour sélectionner les instants clic en exécutant les étapes suivantes:

    - moyenner les amplitudes du signal calculé dans la bande de haute fréquence (RMSH) et dans la bande de basse fréquence (RMSL) dans une fenêtre d'échantillons;
    - dans la fenêtre d'échantillons, déterminer un fragment silencieux correspondant à la moyenne minimum de l'amplitude du signal dans la bande de haute fréquence (RMSH);
    - calculer une moyenne $M_{SIL}$ et un écart standard $D_{SIL}$ de l'amplitude du signal dans la bande de haute fréquence (RMSH) dans le fragment silencieux;
    - calculer les formules suivantes pour obtenir le seuil inférieur U1 et le seuil supérieur U2 respectivement:

$$U1 = M_{SIL} + \alpha_{U1} . D_{SIL}$$

$$U2 = M_{SIL} + \max(\alpha_{U2\_dev} . D_{SIL}, \alpha_{U2\_msl} . RMSL_{m\_T})$$

    où $\alpha_{U1}$, $\alpha_{U2\_dev}$, $\alpha_{U2\_msl}$ sont des paramètres ajustables, et $RMSL_{m\_T}$ est la moyenne de l'amplitude du signal dans la bande de basse fréquence RMSL pour un instant T des instants de temps obtenus par l'algorithme de détection de crête.

6.  Procédé selon la revendication 5, dans lequel la fenêtre d'échantillon dans laquelle les amplitudes de signal calculées dans la bande de haute fréquence (RMSH) et dans la bande de basse fréquence (RMSL) sont moyennées a une longueur de 33 millisecondes.

7.  Procédé selon l'une quelconque des revendications 5-6, dans lequel les paramètres $\alpha_{U1}$, $\alpha_{U2\_dev}$, $\alpha_{U2\_msi}$, sont ajustés avec des valeurs de 6,15 et 0,5 respectivement.

8.  Procédé selon l'une quelconque des revendications 1 à 7, dans lequel le fragment audio numérisé a une durée de 2 minutes, et le signal de son est échantillonné avec une fréquence de 8 kilohertz.

9.  Programme d'ordinateur comprenant un moyen de code de programmation apte à exécuter toutes les étapes du procédé défini selon l'une quelconque des revendications 1 à 8, lorsque ledit programme est exécuté dans un processeur de signaux numériques ou dans un processeur à but général.

FIG. 1

EP 2 314 159 B1

FIG. 2

FIG. 3

FIG. 4

FIG. 5

EP 2 314 159 B1

FIG. 6A

EP 2 314 159 B1

FIG. 6B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080181352 A

- US 7173534 B

**Non-patent literature cited in the description**

- **Robbins W.P. et al.** *Characteristics of acoustic emission signals generated by termite activity in wood,* 08 December 1991, 1047-1051